(19) Europäisches Patentamt
European Patent Office
Office européen des brevets

(11) **EP 1 279 989 B1**

(12) **FASCICULE DE BREVET EUROPEEN**

(45) Date de publication et mention
de la délivrance du brevet:
**24.05.2006 Bulletin 2006/21**

(51) Int Cl.:
*H04N 9/31* *(2006.01)*   *G02B 27/14* *(2006.01)*

(21) Numéro de dépôt: **02291762.9**

(22) Date de dépôt: **11.07.2002**

(54) **Dispositif de visualisation d'images par projection, comprenant des filtres dichroiques à gradient**

Bildprojektionsvorrichtung mit dichroitischen Gradientenfiltern

Image projection device comprising dichroic gradient filters

(84) Etats contractants désignés:
**DE FR GB**

(30) Priorité: **27.07.2001 FR 0110290**

(43) Date de publication de la demande:
**29.01.2003 Bulletin 2003/05**

(73) Titulaire: **Thomson Licensing**
**92100 Boulogne-Billancourt (FR)**

(72) Inventeurs:
- **Sacre, Jean-Jacques**
  **35410 Chateaugiron (FR)**
- **Pitaval, Nicolas**
  **42290 Sorbiers (FR)**

(74) Mandataire: **Browaeys, Jean-Philippe**
**Thomson multimedia**
**European Patents Operations**
**46, quai Le Gallo**
**92648 Boulogne Cedex (FR)**

(56) Documents cités:
| EP-A- 0 457 404 | EP-A- 0 477 028 |
| US-A- 2 589 930 | US-A- 2 945 413 |
| US-A- 4 400 722 | US-A- 5 337 093 |

- **PATENT ABSTRACTS OF JAPAN vol. 016, no. 125 (P-1331), 30 mars 1992 (1992-03-30) -& JP 03 291644 A (SEIKO EPSON CORP), 20 décembre 1991 (1991-12-20)**

**Description**

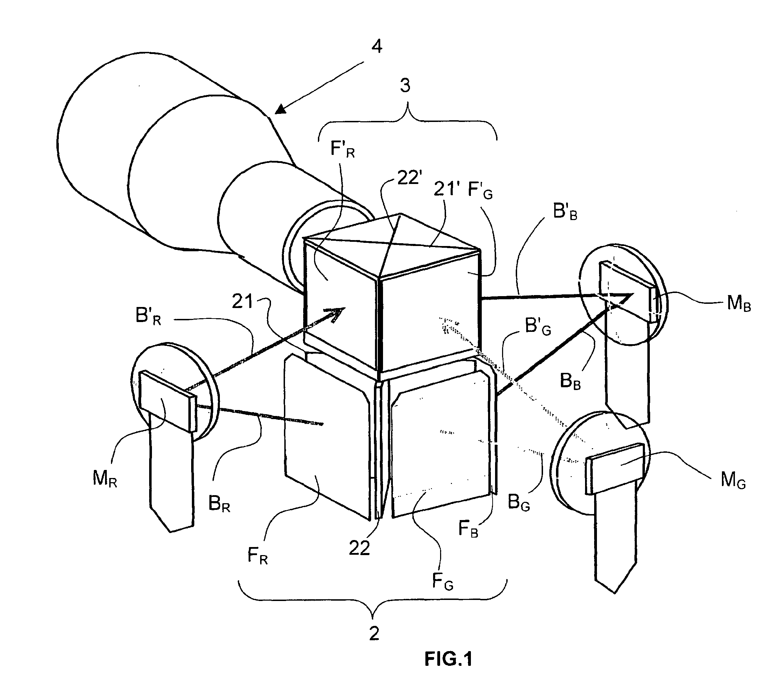

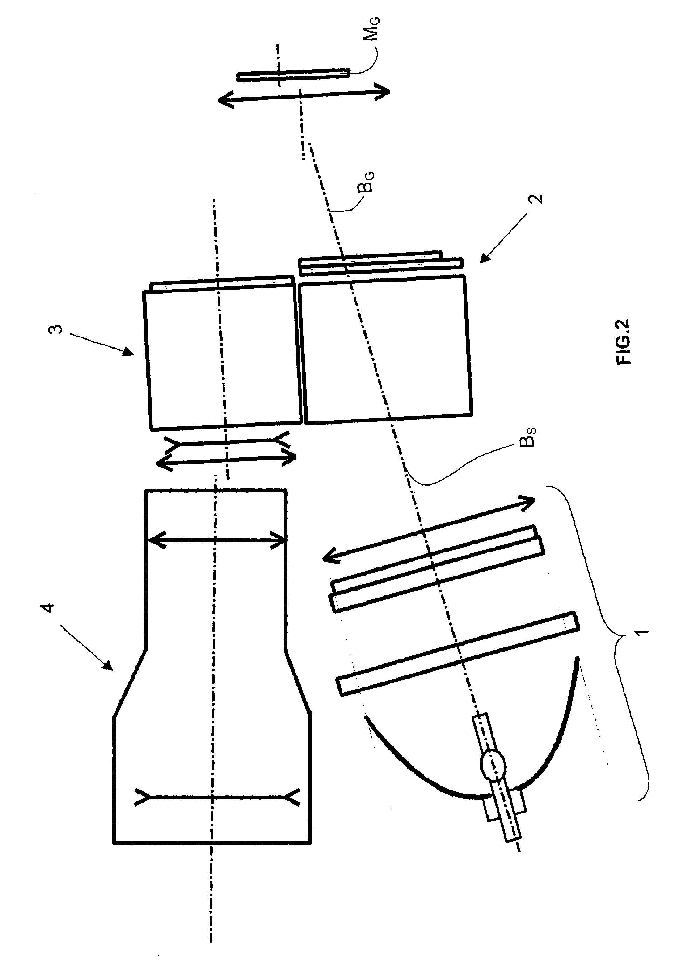

L'invention concerne un dispositif de visualisation d'images sur un écran de projection du type comprenant, en se référant aux figures 1 à 4 :

- une source de lumière 1 émettant un faisceau $B_S$ de lumière polychromatique, généralement blanche,
- des moyens 2 pour décomposer ce faisceau de lumière polychromatique en faisceaux complémentaires de lumière $B_B$, $B_G$ et $B_R$ dont les plages de longueurs d'onde sont différentes et correspondent respectivement aux trois couleurs primaires classiques bleu B, vert G et rouge R,
- en travers de chacun desdits faisceaux complémentaires $B_B$, $B_G$ et $B_R$, des matrices $M_B$, $M_G$ et $M_R$ d'éléments réfléchissants pilotables électriquement en fonction des images à visualiser,
- des moyens 3 pour recomposer les faisceaux complémentaires réfléchis $B'_B$, $B'_G$ et $B'_R$ en un seul faisceau polychromatique modulé $B_P$,
- et un système optique 4 pour projeter sur un écran (non représenté) les images des matrices réfléchissantes $M_B$, $M_G$ et $M_R$ après ladite recomposition des faisceaux, constitué généralement d'un objectif de projection.

Un tel dispositif est utilisé notamment comme rétroprojecteur de télévision ; les matrices d'éléments réfléchissants pilotables électriquement peuvent être par exemple réalisées à partir :

- de modulateurs électro-optiques fonctionnant en réflexion à base de cristaux liquides (« LC »), notamment de cristaux liquides appliqués sur substrat de silicium (« LCOS » ou « Liquid Crystal On Silicon » en langue anglaise) ;
- de modulateurs électro-optiques basés sur des matrices de micro-miroirs, appelés « DMD » ou « Digital mirror Device » en langue anglaise.

Généralement, les matrices $M_B$, $M_G$ et $M_R$ sont disposées de manière à ce que les plans de leur surface réfléchissante se coupent selon des droites parallèles ; ces surfaces réfléchissantes sont d'ailleurs généralement verticales et orthogonales entre elles.

D'une manière classique, comme illustré à la figure 1, les moyens 2 pour décomposer le faisceau $B_S$ de lumière polychromatique et/ou les moyens 3 pour recomposer les faisceaux complémentaires réfléchis $B'_B$, $B'_G$ et $B'_R$ comprennent chacun deux filtres dichroïques 21, 22 ; 21', 22' disposés selon un angle moyen d'incidence prédéterminé β par rapport à l'axe optique des faisceaux incidents à décomposer et/ou à recomposer, chaque filtre dichroïque 21, 22 ; 21', 22' ayant, pour cet angle d'incidence β, sa longueur d'onde de coupure adaptée d'une manière connue en elle-même pour décomposer ou recomposer ce ou ces faisceaux incidents ; chaque filtre étant généralement rectangle, l'enveloppe de ces deux filtres dichroïques forme alors un parallélépipède; les angles d'incidence prédéterminés de ces filtres sont généralement de environ β = 45° ou 135°, de sorte que les deux filtres 21, 22 ; 21', 22' sont en général disposés orthogonalement l'un par rapport à l'autre, comme représenté sur la figure 1.

Du côté des faisceaux complémentaires $B_B$, $B_G$ et $B_R$ et/ou $B'_B$, $B'_G$ et $B'_R$, on peut disposer des filtres dits de confirmation $F_B$, $F_G$ et $F_R$ d'une part, $F'_B$ (non représenté), $F'_G$ et $F'_R$ d'autre part.

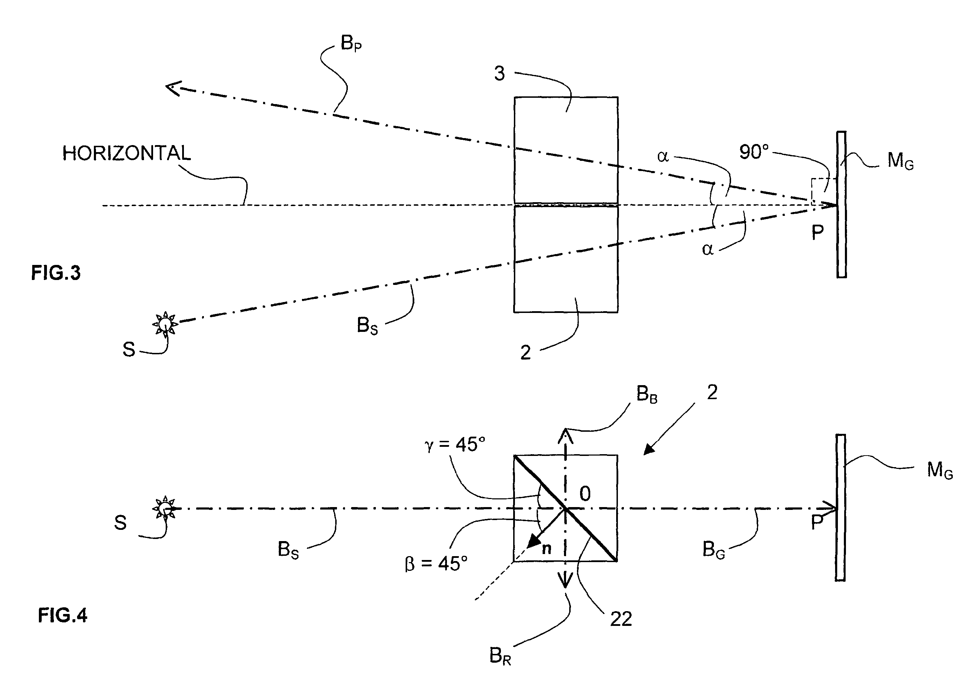

Comme représenté à la figure 1, les filtres dichroïques 21, 22 ; 21', 22' sont disposés sur les diagonales verticales des parallélépipèdes, et les filtres de confirmation $F_B$, $F_G$, $F_R$ ; $F'_B$, $F'_G$, $F'_R$ sont disposés sur les parois verticales de ces parallélépipèdes ; la figure 4, qui représente une vue partielle de dessous du dispositif de visualisation où seul le filtre 22 des moyens de décomposition 2 a été représenté, montre bien que ce filtre est disposé selon la diagonale du parallélépipède ; comme la section horizontale de ce parallélépipède est ici carrée, l'angle d'incidence β que forme, au centre O du filtre 22, l'axe optique du faisceau polychromatique $B_S$ avec la surface de ce filtre 22 est ici de 45°.

La dimension la plus étendue des filtres 21, 22 ; 21', 22' (le plus grand côté du rectangle) correspond à la plus grande dimension des matrices $M_B$, $M_G$ et $M_R$ d'éléments réfléchissants et à la plus grande dimension des images à visualiser; si l'axe optique de chaque faisceau incident frappe le filtre dichroïque en un point d'incidence moyenne O et forme, en ce point, un angle β = 45° avec le plan de ce filtre, les rayons de ce faisceau qui frappent le filtre en des points différents de ce point d'incidence moyenne O présentent des angles d'incidence variables autour de cette valeur moyenne de 45° (ou de 135°) ; la variation des angles d'incidence est évidemment la plus importante le long de la plus grande dimension du filtre.

Comme la longueur d'onde de coupure d'un filtre dichroïque dépend de l'angle d'incidence, on obtiendrait, avec un filtre dichroïque classique, des défauts importants de décomposition et/ou de recomposition des faisceaux et des défauts chromatiques.

Des défauts du même type sont par exemple illustrés dans le document US 4400722 - MATSUSHITA - colonne 3, ligne 59 à colonne 4, ligne 17.

Pour éviter ces défauts, il est connu d'utiliser des filtres dichroïques à gradient, qui présentent une longueur d'onde de coupure constante le long d'une direction parallèle à leur plus grande dimension située dans un plan orthogonal à la surface réfléchissante des matrices $M_B$, $M_G$ et $M_R$ ; cette disposition des filtres et cette orientation du gradient est parfaitement adaptée pour obtenir une longueur d'onde de coupure constante pour tous les rayons du faisceau situé dans ce plan orthogonal ; la direction du gradient d'indice des couches de ces filtres est alors parallèle à la plus grande dimension de ces filtres et comprise dans ce plan orthogonal.

Des filtres dichroïques de ce type sont également décrits dans le document EP 0457404 - PHILIPS - colonne 7, lignes 23 à 37.

Un autre exemple se trouve dans le document JP 03291644 qui emploie des matrices à transmission.

Comme illustré à la figure 3 qui représente une vue schématique partielle de côté du dispositif de visualisation, comme les matrices $M_B$, $M_G$ (seule représentée) et $M_R$ de modulation des faisceaux complémentaires procèdent par réflexion, l'angle d'incidence $\alpha$ de l'axe optique de chaque faisceau incident $B_B$, $B_G$ et $B_R$ respectivement sur chaque matrice $M_B$, $M_G$ et $M_R$ est différent de la normale à ces matrices, de manière à pouvoir bien séparer les faisceaux incidents $B_B$, $B_G$ et $B_R$ provenant de la source 1 des faisceaux réfléchis $B'_B$, $B'_G$ et $B'_R$ se dirigeant vers l'objectif de projection 5 ; puisque l'angle d'incidence sur chaque matrice $M_B$, $M_G$ et $M_R$ est différent de la normale à ces matrices, et puisque les moyens de décomposition 2 et les moyens de recomposition 3 sont superposés, l'axe optique commun aux faisceaux $B_S$ et $B_G$ fait avec l'axe optique commun aux faisceaux $B'_G$ et $B_P$ réfléchis sur la matrice $M_G$ un angle de $2 \times \alpha$ ; la valeur de l'angle $\alpha$ dépend des dimensions et de la disposition des composants optiques du dispositif de visualisation ; cet angle $\alpha$ est généralement compris entre 5° et 20° ; à titre d'exemple, cet angle vaut ici 12°5.

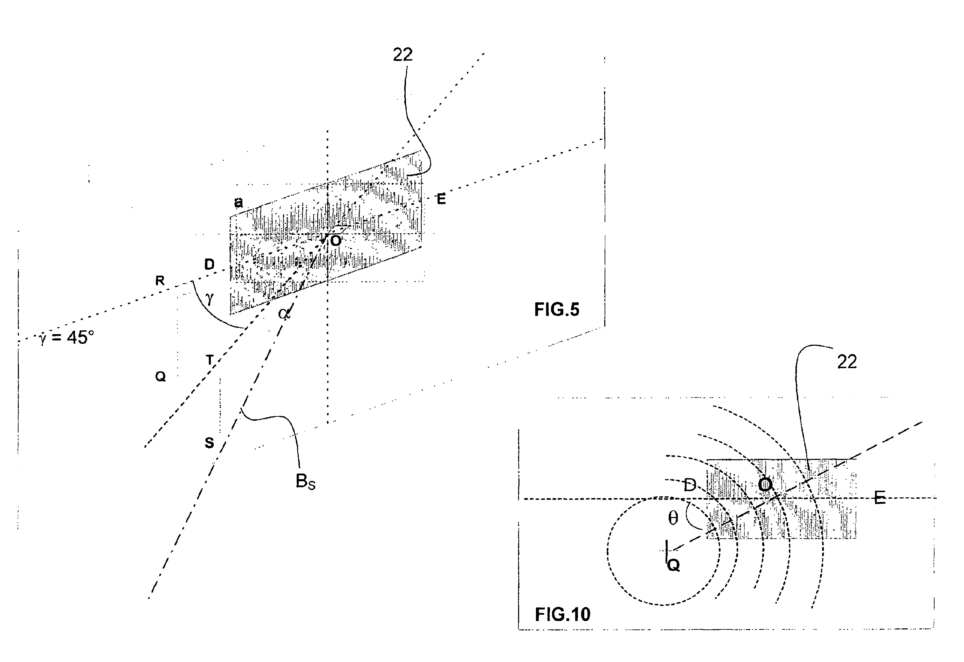

La figure 5 représente une vue en perspective du filtre dichroïque 22 (partie ombrée sur la figure) et de l'axe optique du faisceau polychromatique $B_S$ provenant de la source S traversant en O ce filtre ; on appelle T la projection du point S central de la source sur un plan normal au filtre 22 le coupant selon une sécante DOE passant par O; on appelle Q la projection de ce même point S sur le plan du filtre 22 ; on appelle également R la projection commune du point Q et du point T sur la sécante DOE ; on déduit immédiatement que, dans le plan horizontal, l'angle ROT = $\gamma$ = 90°- $\beta$ = 45° et que, dans le plan vertical, l'angle TOS = $\alpha$.

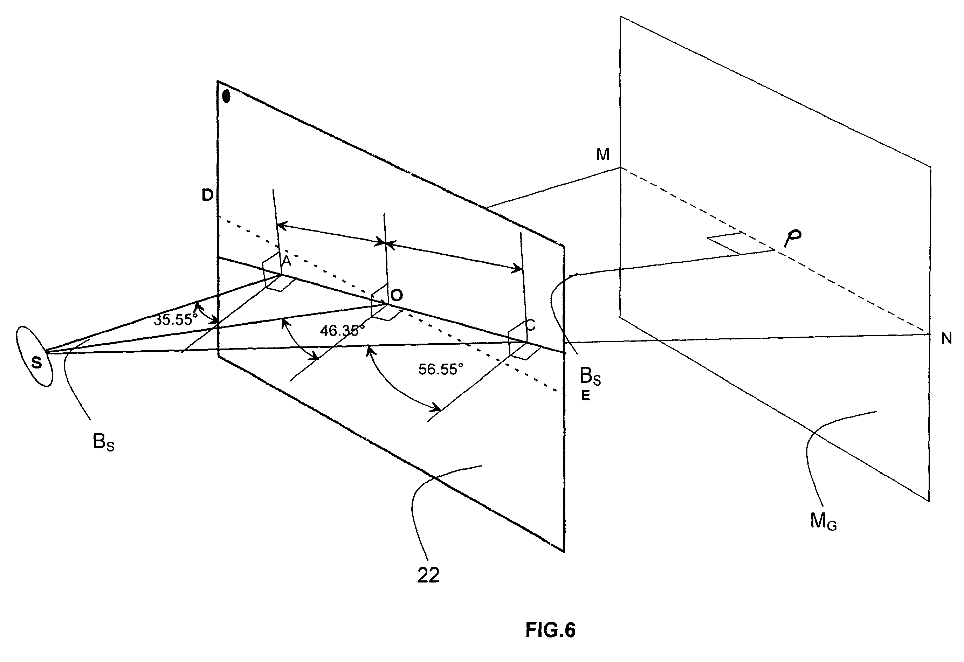

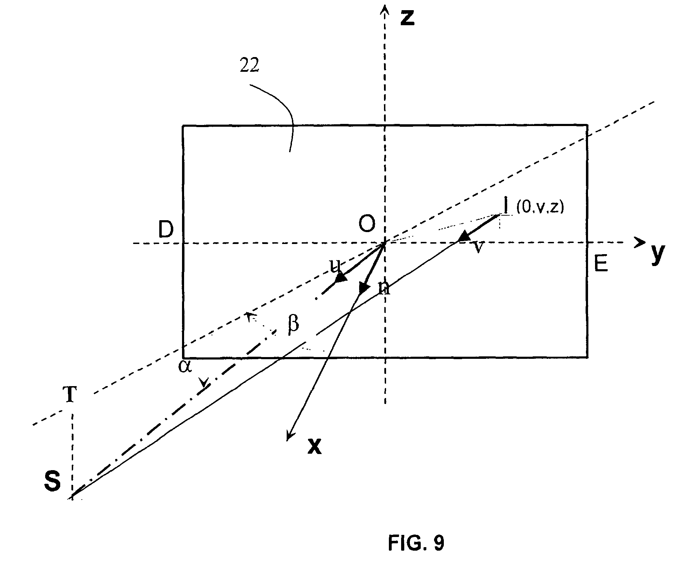

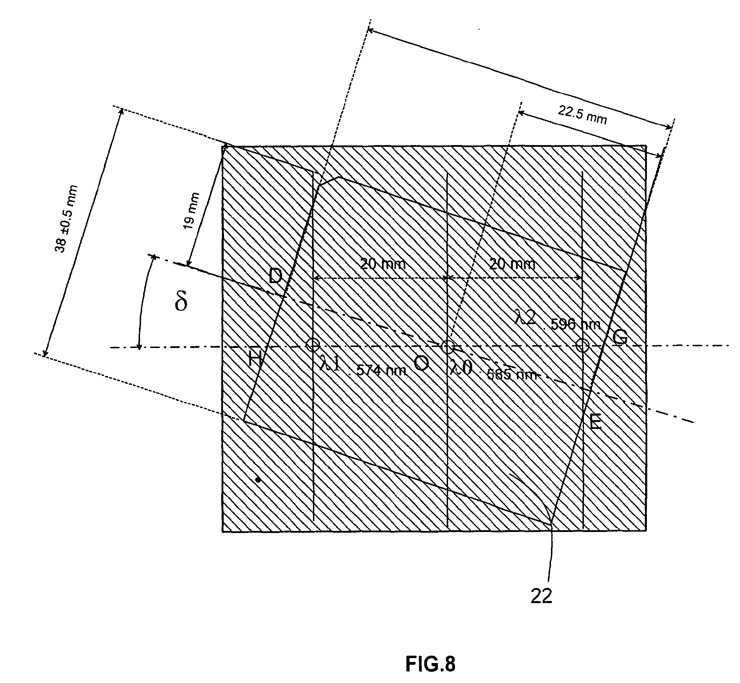

La figure 6 représente, d'une manière comparable à celle de la figure 5, le même filtre dichroïque rectangle 22 ; sur cette figure, les rayons SAM, SOP, SCN sont définis comme formant une médiane horizontale sur la matrice $M_G$ ; on voit bien que, comme indiqué précédemment SA, SO, SC du même faisceau $B_S$ qui frappent le filtre en des points différents A, O, et C présentent des angles d'incidence variables autour d'une valeur moyenne : respectivement ici, 35,55°, 46,35°, 56,55° pour une distance OA = OC = 20 mm.

Or, au point moyen d'incidence O du filtre, les longueurs de coupure sont réglées pour une incidence prédéterminée de 45° ; à cause de l'angle d'incidence non nul $\alpha$ = 12°5 sur les matrices $M_B$, $M_G$ et $M_R$, l'écart d'incidence (46,35° par rapport $\beta$ = 45°) observé au point moyen d'incidence O du filtre par rapport à l'incidence prédéterminée $\beta$ = 45° entraîne un décalage préjudiciable des longueurs d'onde de coupure du filtre.

Pour les autres points d'incidence écartés du point d'incidence moyen O du filtre, notamment les points d'incidence comme A et C des rayons compris dans la plus grande dimension de l'intersection du faisceau incident $B_S$ avec le filtre 22, la direction du gradient du filtre n'est pas bien adaptée ; en effet, comme le gradient du filtre s'étend ici d'une manière classique sur une direction DOE parallèle à la plus grande dimension de ce filtre DOE qui ne correspond pas avec celle de la plus grande dimension AOC de l'intersection du faisceau incident $B_S$ avec le filtre 22 parce que l'angle $\alpha$ n'est pas nul, le gradient ne correspond plus à la distribution des angles d'incidence pour lesquels les longueurs d'onde de coupure restent constantes ; autrement dit, le gradient du filtre, qui est adapté pour obtenir des longueurs d'onde de coupure constantes le long de la droite médiane DOE n'est pas adapté pour obtenir des longueurs d'onde de coupure constantes le long de la droite AOC.

Ainsi, non seulement au point moyen d'incidence O du filtre, mais tout le long de la plus grande dimension de l'intersection du faisceau incident $B_S$ avec le filtre, ici la droite AOC , le fait que l'angle d'incidence $\alpha$ sur les matrices $M_B$, $M_G$ et $M_R$ ne soit pas nul entraîne, tout le long de cette droite AOC, un écart entre les angles réels d'incidence et les angles idéaux d'incidence pour lesquels, par construction du filtre dichroïque à gradient, les longueurs d'onde de coupure sont constantes ; malgré l'utilisation d'un filtre à gradient, le fait que l'angle $\alpha$ ne soit pas nul entraîne donc un décalage préjudiciable des longueurs d'onde de coupure des filtres dichroïques soit des moyens de décomposition 2, soit des moyens de recomposition 3, soit même des deux ; ce décalage est préjudiciable parce qu'il entraîne des défauts chromatiques sur l'image visualisée.

L'invention a pour but d'éviter, ou, à tout le moins, de limiter cet inconvénient.

A cet effet, l'invention a pour objet un dispositif de visualisation d'images sur un écran de projection du type comprenant :

- une source de lumière émettant un faisceau $B_S$ de lumière polychromatique, généralement blanche,
- des moyens pour décomposer ce faisceau de lumière polychromatique en faisceaux complémentaires de lumière $B_B$, $B_G$ et $B_R$ dont les plages de longueurs d'onde sont différentes et correspondent respectivement aux trois couleurs primaires classiques bleu B, vert G et rouge R,

- en travers de chacun desdits faisceaux complémentaires $B_B$, $B_G$ et $B_R$, des matrices $M_B$, $M_G$ et $M_R$ d'éléments réfléchissants pilotables électriquement en fonction des images à visualiser, réfléchissant des faisceaux complémentaires $B'_B$, $B'_G$ et $B'_R$,

  ces matrices $M_B$, $M_G$ et $M_R$ étant disposées de manière à ce que les plans de leurs surfaces réfléchissantes se coupent selon des droites parallèles,

  l'axe optique de chaque faisceau complémentaire incident $B_B$, $B_G$ et $B_R$ faisant un angle d'incidence $\alpha$ non nul avec la direction normale à la matrice correspondante $M_B$, $M_G$ et $M_R$, et l'axe optique de chaque faisceau complémentaire réfléchi $B'_B$, $B'_G$ et $B'_R$ faisant un angle opposé $-\alpha$ avec la normale à la matrice correspondante $M_B$, $M_G$ et $M_R$,

- des moyens pour recomposer les faisceaux complémentaires réfléchis $B'_B$, $B'_G$ et $B'_R$ en un seul faisceau polychromatique modulé $B_P$,

- et un système optique pour projeter sur un écran les images des matrices réfléchissantes $M_B$, $M_G$ et $M_R$ après ladite recomposition des faisceaux,

lesdits moyens pour décomposer et/ou lesdits moyens pour recomposer comprenant deux filtres dichroïques à gradient disposés de manière à ce que l'axe optique du ou des faisceaux incidents à décomposer et/ou à recomposer forme avec ces filtres et en un point moyen d'incidence O, un angle d'incidence approximativement égal à un angle d'incidence prédéterminé $\beta_1$, $\beta_2$ ; $\beta'_1$, $\beta'_2$ correspondant à une longueur d'onde de coupure adaptée pour décomposer ou recomposer le ou les faisceaux incidents,

la longueur d'onde de coupure de chaque filtre étant approximativement constante pour tous les rayons d'un même faisceau dont les points d'incidence sur le filtre sont alignés dans la direction dudit gradient,

pour l'un au moins de ces filtres, la direction du gradient faisant un angle d'inclinaison de gradient $\delta$, $\delta'$ non nul avec un plan orthogonal aux surfaces réfléchissantes des matrices $M_B$, $M_G$ et $M_R$.

C'est l'ensemble des éléments réfléchissants d'une matrice qui forme sa surface réfléchissante; généralement, ledit plan orthogonal aux surfaces réfléchissantes des matrices $M_B$, $M_G$ et $M_R$ est un plan horizontal.

Très couramment, les filtres dichroïques sont disposés dans les moyens de décomposition et/ou dans les moyens de recomposition de manière à ce que les angles d'incidence prédéterminés ($\beta_1$ $\beta_2$; $\beta'_1$, $\beta'_2$ sur ces filtres soient approximativement égaux à 45° ou à 135°.

Grâce à l'invention, on utilise les filtres dichroïques à gradient d'une manière beaucoup plus proche des conditions idéales et on limite considérablement les défauts chromatiques des images visualisées.

De préférence, pour l'au moins un filtre, lorsque l'angle d'incidence $\alpha$ sur les matrices $M_B$, $M_G$ et $M_R$ est compris entre 5° et 20°, l'angle d'inclinaison de gradient $\delta$, $\delta'$ est compris entre 10° et 30°.

De préférence, pour l'au moins un filtre, l'angle d'inclinaison de gradient $\delta$, $\delta'$ est approximativement égal à l'angle $\theta$ défini entre :

- la droite joignant le point Q d'incidence zéro sur ce filtre et ledit point d'incidence moyenne O sur ce filtre, et
- ledit plan orthogonal aux surfaces réfléchissantes des matrices $M_B$, $M_G$ et $M_R$.

De préférence, pour l'au moins un filtre, l'angle d'inclinaison de gradient $\delta$, $\delta'$ est approximativement égal à $\text{ArcTan}(\sin(\alpha))/\sin(\beta),\cos(\alpha))$, où $\beta$ correspond à l'angle d'incidence prédéterminé $\beta_1$, $\beta_2$ ; $\beta'_1$, $\beta'_2$ dudit filtre.

L'invention sera mieux comprise à la lecture de la description qui va suivre, donnée à titre d'exemple non limitatif, et en référence aux figures annexées sur lesquelles :

- les figures 1 à 4, déjà décrites, sont des schémas d'un dispositif de visualisation d'image commun à l'art antérieur et à l'invention : vue en perspective pour la figure 1, vues de côté pour les figures 2 et 3, vue de dessous pour la figure 4 ;
- la figure 5, déjà décrite, présente, en perspective, un filtre dichroïque du dispositif des figures 1 à 4 et le positionnement de l'axe optique du faisceau illuminant ce filtre,
- la figure 6, déjà décrite, présente, en perspective, un filtre dichroïque du dispositif des figures 1 à 4 et le positionnement des rayons lumineux s'étendant dans la plus grande dimension de l'intersection du faisceau incident avec le filtre,

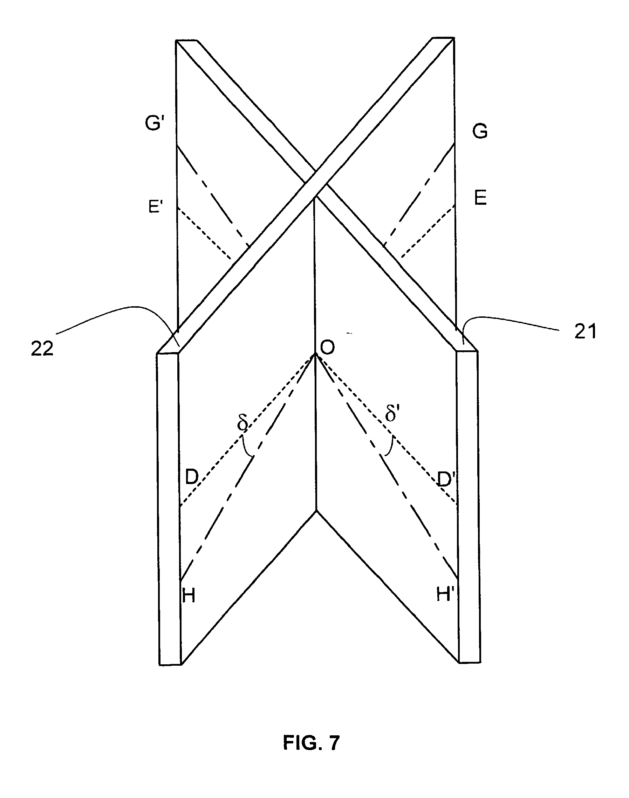

- la figure 7 illustre un mode de réalisation de l'invention appliqué aux filtres dichroïques des moyens de décomposition du dispositif de visualisation selon l'invention,

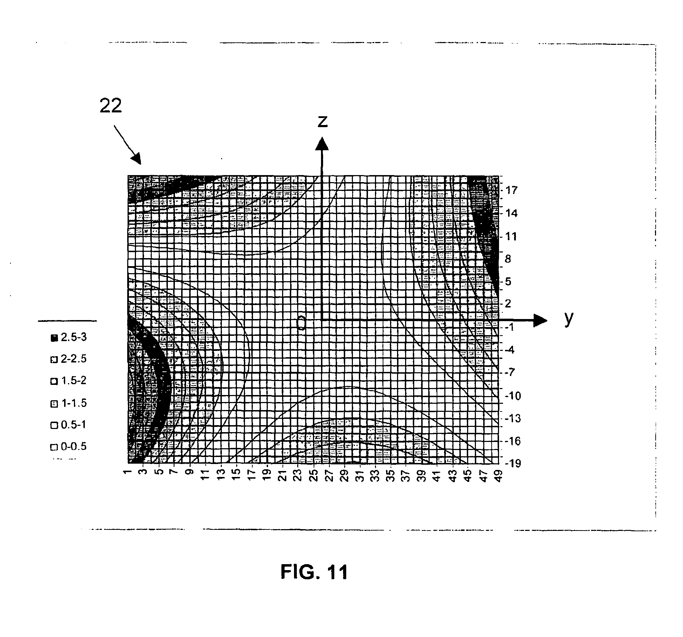

- la figure 8 illustre un mode de fabrication d'un filtre dichroïque utilisable pour la mise en oeuvre de l'invention,
- la figure 9 représente un point I d'incidence quelconque sur un filtre dichroïque et le repère orthonormé utilisé pour calculer les équations des courbes reliant les points du filtre d'égales incidences,
- la figure 10 illustre la répartition en cercles concentriques des courbes reliant les points d'égales incidences sur un filtre dichroïque, et le centre Q de ces points qui correspond à une incidence nulle sur ce filtre,
- la figure 11 représente un ensemble de courbes reliant les points du filtre dichroïque orienté suivant l'invention qui présentent une valeur constante pour la différence entre :

o l'angle d'incidence réel des rayons d'un faisceau sur ce filtre, et

o l'angle d'incidence « idéal » pour lequel le filtre a été conçu, y compris son gradient.

Afin de simplifier la description et de faire apparaître les différences et avantages que présente l'invention par rapport à l'état antérieur de la technique, on utilise des références identiques pour les éléments qui assurent les mêmes fonctions.

Le dispositif de visualisation selon l'invention est identique au dispositif précédemment décrit illustré aux figures 1 à 4, avec une différence essentielle portant sur l'orientation du gradient d'au moins un filtre dichroïque 21, 22 ; 21', 22' soit des moyens de décomposition 2, soit des moyens de recomposition 3, soit des deux.

Pour simplifier l'exposé, on va décrire l'invention dans le cas le plus courant où la surface réfléchissante des matrices $M_B$, $M_G$ et $M_R$ est verticale et où la direction de la plus grande dimension de ces matrices $M_B$, $M_G$ et $M_R$ est horizontale ; cette plus grande dimension correspond à la plus grande dimension de l'image à visualiser; ainsi un plan orthogonal à la surface réfléchissante des matrices $M_B$, $M_G$ et $M_R$ est forcément horizontal ; et, au niveau de chacune des matrices $M_B$, $M_G$, et $M_R$, l'axe optique du faisceau complémentaire $B_B$, $B_G$ ou $B_R$ frappant cette matrice, la normale à cette matrice, et l'axe optique du faisceau complémentaire $B'_B$, $B'_G$ ou $B'_R$ réfléchi par cette matrice sont dans un même plan vertical ; enfin, les plans des surfaces réfléchissantes de ces matrices $M_B$, $M_G$ et $M_R$ se coupent selon des droites verticales.

On va maintenant illustrer l'invention au niveau du filtre dichroïque 22 des moyens de décomposition 2 ; il va de soi que l'invention s'applique de la même façon aux autres filtres dichroïques 21 des moyens de décomposition 2, ou 21' et 22' des moyens de recomposition 3.

La figure 4 illustre, comme dans l'art antérieur, la position du filtre 22 sur la diagonale verticale du parallélépipède des moyens de décomposition 2 ; le vecteur $\vec{n}$ correspond à la direction normale au plan de ce filtre au point O d'incidence moyenne de l'axe optique du faisceau $B_S$ ; la projection sur le plan horizontal (celui du dessin) de l'angle d'incidence de l'axe optique de ce faisceau sur le filtre correspond à l'angle β qui vaut ici 45° ; l'angle complémentaire γ vaut donc également 45°.

Sur la figure 5, ce plan horizontal coupe le plan du filtre selon une sécante médiane DOE parallèle à la plus grande dimension du filtre, comme dans l'art antérieur ; la figure 8 représente le même filtre dichroïque 22 et cette même sécante médiane DOE ; selon l'invention, le gradient de ce filtre s'étend selon une direction HOG faisant un angle δ non nul avec cette sécante ; autrement dit, la direction du gradient HOG du filtre dichroïque 22 fait un angle δ non nul avec un plan orthogonal à la surface réfléchissante des matrices $M_B$, $M_G$ et $M_R$ ; cette inclinaison δ du gradient est orientée dans le même sens que l'inclinaison AOC de la plus grande dimension de l'intersection du faisceau incident $B_S$ avec le filtre 22 (voir figure 6) ; la valeur de l'inclinaison δ et celle de AOC sont en général tout à fait différentes.

Grâce à cette inclinaison δ, dans le cas où l'angle α n'est pas nul, la direction du gradient du filtre est mieux adaptée que dans l'art antérieur, notamment pour les points d'incidence écartés du point moyen d'incidence O du filtre, par exemple pour les points d'incidence A et C (figure 6) ; en effet, comme le gradient du filtre s'étend selon l'invention sur une direction HOG faisant un angle plus petit que dans l'art antérieur avec la direction AOC de la plus grande dimension de l'intersection du faisceau incident $B_S$ avec le filtre 22, le gradient correspond mieux que dans l'art antérieur à la distribution des angles d'incidence pour lesquels les longueurs d'onde de coupure restent constantes ; autrement dit, l'orientation du gradient du filtre est mieux adaptée que dans l'art antérieur pour obtenir des longueurs d'onde de coupure constantes le long de la droite AOC.

Ainsi, au point moyen d'incidence O du filtre et tout le long de la plus grande dimension de la section du faisceau incident $B_S$, cette inclinaison δ du gradient permet de réduire l'écart entre les angles réels d'incidence et les angles idéaux d'incidence pour lesquels, par construction du filtre dichroïque à gradient 22, les longueurs d'onde de coupure sont constantes ; cette inclinaison δ du gradient permet de réduire le décalage de la longueurs d'onde de coupure du filtre dichroïque 22 provoquée par la valeur non nulle de α et de limiter les défauts chromatiques sur l'image visualisée.

Par une série d'essais à la portée de l'homme du métier, on parvient à optimiser l'inclinaison δ en fonction de la valeur de α ; de préférence, pour 5° < α < 20°, on choisit 10° < δ < 30°.

L'invention s'applique avantageusement de la même façon à l'orientation des gradients des autres filtres 21, 21', 22'; la figure 7 illustre également l'invention appliquée au filtre 21 : le gradient de ce filtre qui s'étend selon la direction H'OG' fait un angle non nul δ' avec la direction D'OG' comprise dans le plan horizontal.

Globalement, on obtient ainsi un dispositif de visualisation d'images de meilleure qualité chromatique que ceux de l'art antérieur.

La figure 8 représente un **mode de fabrication du filtre** dichroïque 22 du dispositif selon l'invention tel que représenté à la figure 7 ; on part d'un filtre dichroïque classique de base (partie hachurée de la figure) dont le gradient s'étend selon une direction HOG parallèle à celui de sa plus grande dimension ; on découpe dans ce filtre classique un autre filtre 22 de manière à ce que la direction DOE de sa plus grande dimension fasse un angle δ avec la direction HOG de la plus grande dimension du filtre de base ; on obtient ainsi un filtre dichroïque dont l'orientation du gradient est inclinée d'un angle δ , tel que représenté à la figure 7.

Un mode de réalisation préférentiel de mise en oeuvre de l'invention consiste à positionner le filtre dont on souhaite corriger les défauts de manière à ce que l'angle δ que fait la direction du gradient de ce filtre avec le plan horizontal soit approximativement égal à l'angle θ que forme, avec ce même plan horizontal, la droite joignant le point d'incidence zéro sur ce filtre et le point d'incidence moyenne de l'axe optique du faisceau $B_S$ ou $B_P$ sur ce filtre.

Par angle δ approximativement égal à l'angle θ, on entend δ = θ ± 15%.

Par référence aux figures 5, 6 et 9, **on va chercher à calculer l'angle** θ pour le filtre 22.

On va d'abord chercher à calculer l'équation des courbes qui relient les points I du filtre où les rayons du faisceau incident $B_S$ présentent des incidences i égales.

En se référant à la figure 9 comparable à la figure 5, on définit un repère orthonormé basé au point d'incidence moyenne O du filtre 22, comprenant les axes de repère Ox normal en O au plan du filtre, Oy selon la direction DOE précédemment définie, et Oz, perpendiculaire à Ox et Oy; dans le cas particulier de cet exemple, les axes Ox et Oy sont donc dans un plan horizontal ; comme précédemment (figure 5), le triangle OST est dans un plan vertical, et l'angle au sommet O correspond à l'angle α d'incidence des axes optiques des faisceaux complémentaires sur les matrices ; l'angle entre la direction Ox et la direction OT correspond à l'angle d'incidence β de l'axe optique du faisceau $B_S$ frappant le filtre, complémentaire de l'angle γ de la figure 5.

Soit un point I d'incidence sur le filtre 22 d'un rayon SI quelconque du faisceau $B_T$ issu de la source S ; soit 0, y, z les coordonnées de ce point dans le repère orthonormé ; soit i l'angle d'incidence (non représenté) de ce rayon SI avec le filtre 22 ; l'angle i se définit donc comme l'angle de ce rayon avec la direction normale au filtre au point I ; soit d la distance OS du centre S de la source au point O d'incidence moyenne du faisceau $B_S$ sur le filtre ; soit k la longueur du rayon IS issu de cette même source.

On définit également les éléments suivant: le vecteur $\vec{n}$ correspond au vecteur unitaire normal au filtre de l'axe Ox, le vecteur $\vec{u}$ au vecteur unitaire de l'axe optique OS du faisceau incident, le vecteur $\vec{v}$ au vecteur unitaire du rayon IS.

On va d'abord calculer la distance IS = k en fonction des angles α, β et de la distance d ; si le vecteur IS = k x $\vec{v}$ , si le vecteur OS = d x $\vec{u}$ , et puisque les coordonnées du vecteur $\vec{u}$ sont (cos α . cos β ; sin β. cos α ; sin α ), l'égalité vectorielle IS = IO + OS permet de déduire la valeur de k :

$$k^2 = ( y^2 - 2.d.y.\sin(\beta).\cos(\alpha) + z^2 - 2.d.z.\sin(\alpha) + d^2 ) \qquad [1]$$

Par ailleurs, les projections du vecteur OS et du vecteur IS sur l'axe Ox étant égales, on a :

$$k . \cos(i) = d . \cos(\beta).\cos(\alpha ) \qquad [2]$$

En combinant les équations [1] et [2], on obtient l'équation suivante :

$$(y-d.\sin(\beta).\cos(\alpha))^2 + (z-d.\sin(\alpha))^2 = (d.\cos(\beta).\cos(\alpha).\tan(i))^2 \qquad [3]$$

On déduit immédiatement de cette équation que les courbes reliant les points I où l'incidence i des rayons du faisceau $B_S$ est constante forment des cercles concentriques centrés sur un point de coordonnées (0 , d.sin(β).cos(α) , d.sin(α)) et de rayon R = d.cos(α).cos(β).tan(i) ; ces cercles concentriques et leur centre, le point Q, sont représentés à la figure 10.

Le centre des cercles correspond au point d'incidence zéro sur le filtre 22 et, compte tenu de ses coordonnées, au point Q de la figure 5 ; à partir des coordonnées du point Q, on déduit donc la valeur de l'angle θ que forment entre eux la droite OP et l'axe Oy (ou la droite OD), situé dans un plan horizontal :

$$\theta = ArcTan(\sin(\alpha)/\sin(\beta).\cos(\alpha)) \qquad [4]$$

Pour $\beta$ = 45° et pour $\alpha$ = 12°5, on déduit $\theta$ = 17°4

En faisant varier l'angle $\delta$ autour de la valeur $\theta$, compte tenu de la répartition réelle du flux de lumière sur le filtre à gradient, on a constaté qu'on obtenait les meilleures performances chromatiques au niveau de l'image visualisée sur l'écran du dispositif selon l'invention pour des valeurs qui pouvaient être légèrement différentes de $\theta$, de sorte que $\delta = \theta \pm 15\%$.

La figure 11 illustre les performances de l'invention au niveau du filtre dichroïque 22 lui-même dont le gradient a été incliné d'un angle $\delta$ par rapport à un plan horizontal, la valeur de cet angle $\delta$ étant optimisée par une des méthodes précédemment décrites.

On a représenté sur cette figure un ensemble de courbes reliant les points du filtre 22 pour lesquels est constante la différence :

- l'angle d'incidence réel des rayons du faisceau $B_S$, et
- l'angle d'incidence « idéal» pour lequel le filtre a été conçu, y compris son gradient.

On entend par « angle d'incidence idéal », les angles d'incidence pour lesquels, par construction du filtre, la longueur d'onde de coupure est constante.

Le long des axes Oy, Oz , orientés de la même façon qu'à la figure 9, figurent des repères en millimètres (mm).

La zone la plus claire de cette figure 11 correspond aux points pour lesquels la différence mentionnée ci-dessus est la plus faible, c'est à dire aux points pour lesquels le filtre 22 est utilisé très près des conditions idéales ; on constate sur cette figure que la zone centrale la plus claire présente une surface importante, ce qui signifie qu'une très grande partie du filtre 22 est utilisée très près des conditions idéales, c'est à dire présente une longueur d'onde de coupure constante apte à réduire les défauts chromatiques ; par comparaison avec d'autres réseaux de courbes réalisés sur des filtres positionnés sans inclinaison comme dans l'art antérieur, on constate que l'aire de la zone centrale très claire de la figure 11 est beaucoup plus importante que dans l'art antérieur.

**Revendications**

1. Dispositif de visualisation d'images sur un écran de projection du type comprenant :

   - une source de lumière (1) émettant un faisceau $B_S$ de lumière polychromatique,
   - des moyens (2) pour décomposer ce faisceau de lumière polychromatique en faisceaux complémentaires de lumière $B_B$, $B_G$ et $B_R$ dont les plages de longueurs d'onde sont différentes et correspondent respectivement aux trois couleurs primaires classiques bleu B, vert G et rouge R,
   - en travers de chacun desdits faisceaux complémentaires $B_B$, $B_G$ et $B_R$, des matrices $M_B$, $M_G$ et $M_R$ d'éléments réfléchissants pilotables électriquement en fonction des images à visualiser, réfléchissant des faisceaux complémentaires $B'_B$, $B'_G$ et $B'_R$,
   ces matrices $M_B$, $M_G$ et $M_R$ étant disposées de manière à ce que les plans de leurs surfaces réfléchissantes se coupent selon des droites parallèles,
   l'axe optique de chaque faisceau complémentaire incident $B_B$, $B_G$ et $B_R$ faisant un angle d'incidence $\alpha$ non nul avec la direction normale à la matrice correspondante $M_B$, $M_G$ et $M_R$, et l'axe optique de chaque faisceau complémentaire réfléchi $B'_B$, $B'_G$ et $B'_R$ faisant un angle opposé $-\alpha$ avec la normale à la matrice correspondante $M_B$, $M_G$ et $M_R$,
   - des moyens (3) pour recomposer les faisceaux complémentaires réfléchis $B'_B$, $B'_G$ et $B'_R$ en un seul faisceau polychromatique modulé $B_P$,
   - et un système optique (4) pour projeter sur un écran les images des matrices réfléchissantes $M_B$, $M_G$ et $M_R$ après ladite recomposition des faisceaux,

   lesdits moyens (2) pour décomposer et/ou lesdits moyens (3) pour recomposer comprenant deux filtres dichroïques à gradient (21, 22 ; 21', 22') disposés de manière à ce que l'axe optique du ou des faisceaux incidents à décomposer et/ou à recomposer forme avec ces filtres et en un point moyen d'incidence O, un angle d'incidence approximativement égal à un angle d'incidence prédéterminé $\beta_1$, $\beta_2$; $\beta'_1$, $\beta'_2$ correspondant à une longueur d'onde de coupure adaptée pour décomposer ou recomposer le ou les faisceaux incidents,
   la longueur d'onde de coupure de chaque filtre (21, 22 ; 21', 22') étant approximativement constante pour tous les rayons d'un même faisceau dont les points d'incidence sur le filtre sont alignés dans la direction HOG, H'OG' dudit gradient,
   pour l'un au moins de ces filtres (21, 22 ; 21', 22'), la direction du gradient (HOG, H'OG') faisant un angle d'inclinaison de gradient $\delta$, $\delta'$ non nul avec un plan orthogonal (DOE, D'OE') aux surfaces réfléchissantes des matrices $M_B$, $M_G$

et $M_R$.

**2.** Dispositif selon la revendication 1 **caractérisé en ce que** ledit plan orthogonal aux surfaces réfléchissantes des matrices $M_B$, $M_G$ et $M_R$ est un plan horizontal.

**3.** Dispositif selon l'une quelconque des revendications précédentes **caractérisé en ce que**, pour l'au moins un filtre (21, 22 ; 21', 22'), ledit angle d'incidence prédéterminé $\beta_1$, $\beta_2$ ; $\beta'_1$, $\beta'_2$ sur ce filtre est approximativement égal à 45° ou à 135°.

**4.** Dispositif selon l'une quelconque des revendications précédentes **caractérisé en ce que**, pour l'au moins un filtre (21, 22 ; 21', 22'), lorsque ledit angle d'incidence $\alpha$ sur les matrices $M_B$, $M_G$ et $M_R$ est compris entre 5° et 20°, ledit angle d'inclinaison de gradient $\delta$, $\delta'$ est compris entre 10° et 30°.

**5.** Dispositif selon l'une quelconque des revendications précédentes **caractérisé en ce que**, pour l'au moins un filtre (21, 22 ; 21', 22'), ledit angle d'inclinaison de gradient $\delta$, $\delta'$ est approximativement égal à l'angle $\theta$ défini entre :

  - la droite joignant le point Q d'incidence zéro sur ce filtre et ledit point d'incidence moyenne O sur ce filtre, et
  - ledit plan orthogonal (DOE, D'OE') aux surfaces réfléchissantes des matrices $M_B$, $M_G$ et $M_R$.

**6.** Dispositif selon l'une quelconque des revendications précédentes **caractérisé en ce que**, pour l'au moins un filtre (21, 22 ; 21', 22'), ledit angle d'inclinaison de gradient $\delta$, $\delta'$ est approximativement égal à :

  ArcTan(sin($\alpha$)/sin($\beta$).cos($\alpha$)), où $\beta$ correspond à l'angle d'incidence prédéterminé $\beta_1$, $\beta_2$ ; $\beta'_1$, $\beta'_2$ dudit filtre.

**Claims**

**1.** Device for displaying images on a projection screen of the type comprising:

  - a light source (1) emitting a beam $B_S$ of generally white polychromatic light,
  - means (2) for deconstructing this polychromatic light beam into complementary light beams $B_B$, $B_G$ and $B_R$, whose wavelength ranges are different and correspond to the three conventional primary colours blue B, green G and red R, respectively,
  - in the path of each of the said complementary beams $B_B$, $B_G$ and $B_R$, matrices $M_B$, $M_G$ and $M_R$ of reflecting elements which are electrically driveable according to the images to be displayed, reflecting complementary beams $B'_B$, $B'_G$ and $B'_R$,
  these matrices $M_B$, $M_G$ and $M_R$ being arranged so that the planes of their reflecting surfaces intersect along parallel straight lines,
  the optical axis of each incident complementary beam $B_B$, $B_G$ and $B_R$ making a non-zero angle of incidence $\alpha$ with the direction normal to the corresponding matrix $M_B$, $M_G$ and $M_R$, and the optical axis of each reflected complementary beam $B'_B$, $B'_G$ and $B'_R$ making the opposite angle $-\alpha$ with the normal to the corresponding matrix $M_B$, $M_G$ and $M_R$,
  - means (3) for reconstructing the reflected complementary beams $B'_B$, $B'_G$ and $B'_R$ into a single modulated polychromatic beam $B_P$,
  - and an optical system (4) for projecting onto a screen the images of the reflecting matrices $M_B$, $M_G$

  and $M_R$ after the said reconstruction of the beams, the said deconstructing means (2) and/or the said reconstructing means (3) comprising two dichroic filters with a gradient (21, 22; 21', 22') arranged so that the optical axis of the incident beam or beams to be deconstructed and/or reconstructed forms, with these filters and at a midpoint of incidence O, an angle of incidence approximately equal to a predetermined angle of incidence $\beta_1$, $\beta_2$; $\beta'_1$, $\beta'_2$ corresponding to a cutoff wavelength matched to deconstruct or reconstruct the incident beam or beams,
  the cutoff wavelength of each filter (21, 22; 21', 22') being approximately constant for all the rays of the same beam whose points of incidence on the filter are aligned in the direction HOG, H'OG' of the said gradient,
  for at least one of these filters (21, 22; 21', 22'), the direction of the gradient (HOG, H'OG') making a non-zero angle of inclination of gradient $\delta$, $\delta'$ with a plane (DOE, D'OE') orthogonal to the reflecting surfaces of the matrices $M_B$, $M_G$ and $M_R$.

**2.** Device according to Claim 1, **characterized in that** the said plane orthogonal to the reflecting surface of the matrices

$M_B$, $M_G$ and $M_R$ is a horizontal plane.

3. Device according to either of the preceding claims, **characterized in that**, for the at least one filter (21, 22; 21', 22'), the said predetermined angle of incidence $\beta_1$, $\beta_2$; $\beta'_1$, $\beta'_2$ is approximately equal to 45° or to 135°.

4. Device according to any one of the preceding claims, **characterized in that**, for the at least one filter (21, 22; 21', 22'), when the said angle of incidence $\alpha$ on the matrices $M_B$, $M_G$ and $M_R$ is between 5° and 20°, the said angle of inclination of gradient $\delta$, $\delta'$ is between 10° and 30°.

5. Device according to any one of the preceding claims, **characterized in that**, for the at least one filter (21, 22; 21', 22'), the said angle of inclination of gradient $\delta$, $\delta'$ is approximately equal to the angle $\theta$ defined between:

   - the straight line joining the point Q of zero incidence on this filter and the said midpoint of incidence O on this filter, and
   - the said plane (DOE, D'OE') orthogonal to the reflecting surfaces of the matrices $M_B$, $M_G$ and $M_R$.

6. Device according to any one of the preceding claims, **characterized in that**, for at least one filter (21, 22; 21', 22'), the said angle of inclination of gradient $\delta$, $\delta'$ is approximately equal to:

   arctan (sin $(\alpha,)$ /sin $(\beta)$ . cos $(\alpha))$ , where $\beta$ corresponds to the predetermined angle of incidence $\beta_1$, $\beta_2$; $\beta'_1$, $\beta'_2$ of the said filter.

**Patentansprüche**

1. Vorrichtung zur Bilddarstellung auf einer Projektionsfläche die beinhaltet:

   - eine Lichtquelle (1) die ein Lichtbündel $B_S$ aus mehrfarbigem Licht aussendet,
   - Mittel zur Trennung des mehrfarbigen Lichtstrahls in komplementäre Lichtstrahlen $B_B$, $B_G$ und $B_R$, deren Grenzwellenbereiche unterschiedlich sind und jeweils den herkömmlichen drei Primärfarben Blau B, Grün G und Rot R entsprechen,
   - entlang jedes komplementären Lichtstrahls $B_B$, $B_G$ und BR, Matrixen $M_B$, $M_G$ und $M_R$ mit elektrisch steuerbaren, reflektierenden Elementen entsprechend der darzustellenden Bilder und die komplementäre Lichtstrahlen $B'_B$, $B'_G$ und $B'_R$ reflektieren,
   und diese Matrixen $M_B$, $M_G$ und $M_R$ so angeordnet sind, dass sich die Ebenen ihrer reflektierenden Oberflächen gemäss den parallelen Geraden schneiden,
   die optische Achse jedes einfallenden komplementären Lichtstrahls $B_B$, $B_G$ und $B_R$ einen Winkel nicht Null mit der normalen Richtung zur entsprechenden Matrix $M_B$, $M_G$ und $M_R$ bildet und die optische Achse jedes reflektierten komplementären Lichtstrahls $B'_B$, $B'_G$ und $B'_R$ einen entgegen gesetzten Winkel -$\alpha$ mit der Normalen zur entsprechenden Matrix $M_B$, $M_G$ und $M_R$ bildet.
   - Mittel (3) zur Zusammensetzung der reflektierten komplementären Lichtstrahlen $B'_B$, $B'_G$ und $B'_R$ zu einem einzigen mehrfarbigen modulierten Lichtstrahl $B_P$
   - und ein optisches Verfahren zur Projektion der Bilder der reflektierenden Matrixen $M_B$, $M_G$ und $M_R$ auf eine Bildfläche nach der Zusammensetzung der Lichtstrahlen,

   die Mittel (2) zur Trennung und / oder die Mittel (3) zur Zusammensetzung beinhalten zwei dichroitische Gradientenfilter (21, 22; 21', 22'), die so angeordnet sind, dass die optische Achse des / der zu trennenden und / oder des / der zusammen zu setzenden einfallenden Strahlen mit diesen Filtern einen mittleren Einfallspunkt O bildet / bilden, einen Einfallswinkel ungefähr gleich dem vorbestimmten Einfallswinkel $\beta_1$, $\beta_2$, $\beta'_1$, $\beta'_2$ entsprechend einer Grenzwellenlänge, die geeignet ist, die einfallenden Lichtstrahlen zu trennen oder zusammenzusetzen, die Grenzwellenlänge jedes Filters (21, 22; 21', 22') ist ungefähr konstant für alle Strahlen des gleichen Lichtbündels, deren Einfallspunkte auf das Filter in der Richtung HOG, H'OG' des Gradienten ausgerichtet sind, für mindestens eines dieser Filter (21, 22; 21', 22') die Richtung des Gradienten (HOG, H'= G') einen Neigungswinkel des Gradienten $\delta$, $\delta'$ nicht Null mit der orthogonalen Ebene (DOE, D'OE') auf den reflektierenden Flächen der Matrixen $M_B$, $M_G$ und $M_R$ bildet.

2. Vorrichtung nach Anspruch 1
   **dadurch gekennzeichnet, dass**

die orthogonale Ebene zu den reflektierenden Ebenen der Matrixen $M_B$, $M_G$ und $M_R$ eine waagrechte Ebene ist.

**3.** Vorrichtung nach einem der vorhergehenden Ansprüche
**dadurch gekennzeichnet, dass**
für zumindest ein Filter (21, 22; 21', 22') der vorbestimmte Einfallswinkel $\beta_1$, $\beta_2$; $\beta'_1$, $\beta'_2$ auf dieses Filter ungefähr 45° oder 135° entspricht.

**4.** Vorrichtung nach einem der vorhergehenden Ansprüche
**dadurch gekennzeichnet, dass**
für zumindest ein Filter (21, 22; 21', 22'), wenn der Einfallswinkel $\alpha$ auf die Matrixen $M_B$, $M_G$ und $M_R$ zwischen 5° und 20° liegt, der Neigungswinkel des Gradienten $\delta$, $\delta'$ zwischen 10° und 30° liegt.

**5.** Vorrichtung nach einem der vorhergehenden Ansprüche
**dadurch gekennzeichnet, dass**
für zumindest ein Filter (21, 22; 21', 22') der Neigungswinkel des Gradienten $\delta$, $\delta'$ ungefähr dem Winkel $\theta$ liegt, der bestimmt ist zwischen:

- der Geraden, die dem Einfallspunkt Q Null auf diesem Filter und dem mittleren Einfallspunkt O auf dem Filter folgt und
- der orthogonalen Ebene (DOE, D'OE') zu den reflektierenden Flächen der Matrixen $M_B$, $M_G$ und $M_R$.

**6.** Vorrichtung nach einem der vorhergehenden Ansprüche
**dadurch gekennzeichnet, dass**
für zumindest ein Filter (21, 22; 21', 22') der Neigungswinkel des Gradienten $\delta$, $\delta'$ ungefähr entspricht:

ArcTan(sin($\alpha$) / sin($\beta$).cos($\alpha$)), wobei $\beta$ einem vorbestimmten Einfallswinkel $\beta_1$, $\beta_2$; $\beta'_1$, $\beta'_2$ des Filters entspricht.

FIG.1

FIG.2

EP 1 279 989 B1

**FIG.3**

**FIG.4**

FIG.5

FIG.10

**FIG.6**

EP 1 279 989 B1

FIG. 9

EP 1 279 989 B1

FIG.8

**FIG. 7**

**FIG. 11**